# EUROPÄISCHE PATENTSCHRIFT

(11) **EP 2 367 769 B1**
(45) Veröffentlichungstag und Bekanntmachung des Hinweises auf die Patenterteilung: **11.10.2017**
(21) Anmeldenummer: 09799391.9
(22) Anmeldetag: 15.12.2009
(51) Int. Cl.: C04B 7/42, C04B 7/02, C04B 7/32

(54) **VERFAHREN ZUR HERSTELLUNG VON PHOTOKATALYTISCH AKTIVEM KLINKER**
METHOD FOR PRODUCING PHOTOCATALYTICALLY ACTIVE CLINKER
PROCÉDÉ DE FABRICATION DE CLINKER À EFFET PHOTOCATALYTIQUE

(30) Priorität: 17.12.2008 AT 19692008
(43) Veröffentlichungstag der Anmeldung: 28.09.2011
(73) Patentinhaber: Holcim Technology Ltd., 8645 Rapperswil-Jona (CH)
(72) Erfinder: SHREESH, Anant, Khadilkar, Maharashtra (IN); MANISH, Vasant, Karandlkar, Maharashtra (IN); PRADEEP, Gopal, Lele, Thane 400 602 Maharashtra (IN)
(74) Vertreter: Keschmann, Marc
(86) Internationale Anmeldenummer: PCT/IB2009/007783
(87) Internationale Veröffentlichungsnummer: WO 2010/070426

(56) Entgegenhaltungen:
- EP-A1- 0 181 739
- WO-A2-2008/017934
- FR-A- 957 317
- FR-A1- 2 760 003
- US-A- 1 555 405

## Beschreibung

Die Erfindung betrifft ein Verfahren zur Herstellung von photokatalytisch aktivem Klinker.

Photokatalyse meint in diesem Zusammenhang Reaktionen, bei welchen ein Katalysator unter der Einwirkung von Licht geeigneter Wellenlänge in einen angeregten Zustand gebracht wird, in welchem Zustand die Katalyse von diversen Abbaureaktionen verschiedener organischer Moleküle vonstatten gehen kann. Der Katalysator geht bei diesen Reaktionen wieder in den Ausgangszustand zurück und kann durch Licht neuerlich angeregt werden.

Es sind bereits eine Reihe von Baustoffen bekannt, bei welchen von dem Phänomen der Photokatalyse Gebrauch gemacht wird, wobei insbesondere Titandioxid in der Anatas-Form zum Einsatz gelangt. Das europäische Patent EP 1 535 886 offenbart ein hydraulisches Bindemittel, bei welchem Titandioxid gemeinsam mit Zuschlagstoffen und Wasser in Form von photokatalytischen Partikeln enthalten ist, wobei zumindest 5 Gew.-% der Titandioxidpartikel die Anatas-Struktur aufweisen. Bei dem hydraulischen Bindemittel der EP 1 535 886 sind weiters Anatas-Anteile der Titandioxidphase von bis zu 70% vorgesehen, wobei der Rest des Titandioxids vorwiegend als Rutil vorliegt. Bei diesem hydraulischen Bindemittel ist somit der Anteil der Anatas-Form an der Gesamtheit des vorhandenen Titandioxids für die photokatalytische Wirkung überaus bedeutsam, sodass die Auswahl und Beschaffung von geeignetem Titandioxid problematisch ist.

Die US 1,555,405 offenbart die Herstellung eines Titanathaltigen Klinker, wobei Titan-Eisen-Schlacke als Rohstoff für die Verklinkerung eingesetzt wird. Es ist somit Aufgabe der vorliegenden Erfindung ein Verfahren anzugeben, mit welchem photokatalytisch aktiver Klinker und in der Folge photokatalytisch aktiver Zement hergestellt werden kann, bei welchem Titandioxid unabhängig von dessen Herkunft und dessen Gehalt an Anatas eingesetzt werden kann. Zur Lösung dieser Aufgabe besteht das erfindungsgemäße Verfahren im Wesentlichen darin, dass TiO, enthaltende Materialien wie definiert in Anspruch 1 mit Klinkerrohmehl bzw. -rohmix zu Kalziumtitanaten, insbesondere CaTiO₃, umgesetzt werden. Mit dem erfindungsgemäßen Verfahren können die TiO₂ enthaltende Materialien direkt beim Klinkerherstellungsprozess in den Klinker eingebracht und zu der als Kalziumtitanat bzw. CaTiO₃ bezeichneten photokatalytisch aktiven Spezies umgesetzt werden. Unter diesen Verbindungen sind neben CaTiO₃ auch andere Verbindungen wie CaTiO₄, Ca₃Fe₂TiO₈, CaTi₄O₉, Ca₂Ti₅O₁₂, Ca₄Ti₃O₁₀, CaTi₂O₄(OH)₂, NaK₂Ca₂TiSi₇O₁₉(OH), Ca-TiSiO₅, BaCaTiO₄, Ca₃Fe₂TiO₈, Ca₂TiO₄O₁₂.4H₂0, Mg₂TiO₄O₁₂.4H₂0, Fe₂TiO₄O₁₂.4H₂0, Al₂TiO₄O₁₂.4H₂0, Ca₃Fe₃O₁₂, Ca₃Ti₃O₁₂, Ca₃(Ti₂Si)₃O₁₂, Ca₃Fe₂TiO₄(OH)₈, MgAl₂TiO₃O₁₀, α-Al₂TiO₅, Al₂TiO₅, Mg₂Al₆Ti₇O₂₅ und BaTi₄Al₂O₁₂ vertreten. Alle diese Verbindungen sind photokatalytisch aktiv und verbessern die photokatalytische Aktivität des Klinkers bzw. des Zements und werden in Abhängigkeit von der Verfügbarkeit von Oxiden wie Al₂O₃, Fe₂O₃, BaO, SrO, Mn₂O₃, SiO₂, Na₂O, K₂O oder dgl. gebildet.

Mit Vorteil ist das erfindungsgemäße Verfahren hierbei dahingehend weitergebildet, dass die TiO₂ enthaltenden Materialien gemeinsam mit Klinkerrohmix einem Drehrohrofen aufgegeben und gebrannt werden, was insbesondere dann vor Vorteil ist, wenn das Titandioxid in Pulverform vorliegt und somit ein einfaches Vermischen mit dem Rohmehl für die Klinkerherstellung möglich ist. Alternativ kann es jedoch bevorzugt auch vorgesehen sein, dass die TiO₂ enthaltenden Materialien und der Klinkerrohmix getrennt voneinander dem Drehrohrofen aufgegeben und im Drehrohrofen miteinander umgesetzt und gebrannt werden. Eine solche Verfahrensführung ist vorteilhaft, wenn das Titandioxid in Form von Suspensionen vorliegt, sodass ein Vermischen mit dem kalzinierten Rohmehl untunlich erscheint. Die feuchten oder nassen TiO₂ enthaltenden Materialien können hierbei mit bekannten Einstoßvorrichtungen in den Drehrohrofen eingebracht werden, sodass eine Durchmischung der TiO₂ enthaltenden Materialien mit dem Rohmehl erst im Drehrohrofen bei der Umwandlung von TiO₂ in CaTiO₃ oder die oben genannten Verbindungen erfolgt.

Mit Vorteil ist das Verfahren gemäß der vorliegenden Erfindung dahingehend weitergebildet, dass das Brennen bei Temperaturen von über 1250°C, bevorzugt bei 1350°C und besonders bevorzugt bei 1450°C erfolgt. Bei Versuchen wurde gefunden, dass die Bildung von CaTiO₃ aus CaO und TiO₂ bei Temperaturen von über 1250°C beginnt, wobei bei Brenntemperaturen von 1450°C eine vollständige Umsetzung des eingesetzten Titandioxids mit dem im Überschuss vorhandenen CaO zu CaTiO₃ beobachtet wurde.

Für eine ausreichende photokatalytische Wirkung des Zements der mit dem Klinker, der nach dem erfindungsgemäßen Verfahren hergestellt wurde, hergestellt wird, muss im Klinker eine entsprechende Menge CaTiO₃ vorliegen, wobei eine Überdosierung des CaTiO₃ die physikalische Integrität des Zements gefährden würde. Das Verfahren gemäß der vorliegenden Erfindung ist daher bevorzugt dahingehend weitergebildet, dass die TiO₂ enthaltenden Materialien dem Klinkerrohmix in Mengen zugegeben werden, um einen TiO₂-Gehalt von 2 Gew.-% bis 5 Gew.-% und insbesondere von 3 Gew-% zu ergeben, woraus CaTiO₃-Anteile in Klinker von ungefähr 4 Gew.-% bis 10 Gew.-% resultieren. Der Anteil des eingesetzten Titandioxids kann unter Umständen aber auch höher gewählt werden.

Wie eingangs bereits erwähnt, ermöglicht das erfindungsgemäße Verfahren den Einsatz von TiO₂ enthaltenden Materialien unter-schiedlichster Provenienz und es ist im Rahmen des Verfahrens gemäß der vorliegenden Erfindung vorgesehen, dass als TiO₂-enthaltende Materialien Abfallstoffe wie Farbschlamm, Altfarbe, Brennerasche, Kunststoffe und/oder verbrauchter TiO₂-Katalysator verwendet werden. Solche Ausgangsmaterialien sind überaus kostengünstig auf dem Markt erhältlich und stellen in manchen Industriezwecken sogar ein Problem hinsichtlich ihrer Entsorgung dar, sodass mit der vorliegenden Erfindung photokatalytischer Klinker auf überaus kostengünstige Weise hergestellt werden kann. Insbesondere bei der Verwendung von Farbschlamm, Altfarbe und Kunststoffen kann sich aufgrund der in diesen Materialien möglicherweise noch enthaltenen Lösungsmittelrückstände oder Rückstände von anderen organischen Verbindungen ein zusätzlicher Nutzen dahingehend einstellen, dass die neben dem TiO₂ vorhandenen Verbindungen als Sekundärbrennstoffe im Klinkerprozess dienen können.

Das erfindungsgemäße Verfahren eignet sich für die Herstellung von photokatalytisch aktivem Klinker auf der Basis von bereits bekannten Klinkerzusammensetzungen, wobei das Verfahren mit Vorteil dahingehend weitergebildet ist, dass als Klinkerrohmix ein Rohmix für Calcium-Sulfoaluminat-Klinker eingesetzt wird. Das bei dem erfindungsgemäßen Verfahren gebildete CaTiO₃ nimmt hierbei keinen negativen Einfluss auf die Abbinde- und Festigkeitseigenschaften des fertigen Klinkers, sodass der mit dem erfindungsgemäßen Verfahren hergestellte Klinker in bekannter Art und Weise verarbeitet werden kann. Alternativ kann mit Vorteil so verfahren werden, dass als Klinkerrohmix ein Rohmix für Portlandzement-Klinker eingesetzt wird. Das erfindungsgemäße Verfahren stellt daher photokatalytisch aktiver Klinker zur Verfügung, welcher dadurch gekennzeichnet ist, dass die photokatalytisch aktive Phase Kalziumtitanate, insbesondere CaTiO₃, umfasst. Die Gruppe der Kalziumtitanate umfasst die oben genannten Verbindungen. Wie eingangs beschrieben, wurde bisher für photokatalytischen Klinker bzw. photokatalytisch aktiven Zement Titandioxid und hier insbesondere Titandioxid in der Anatas-Form eingesetzt. Es hat sich nun überraschend gezeigt, dass auch CaTiO₃ herausragende photokatalytische Eigenschaften besitzt, wobei CaTiO₃ mit dem oben angegeben Verfahren auf überaus kostengünstige Weise direkt beim Klinkerprozess hergestellt werden kann. Nicht erfindungsgemäß ist die Herstellung von CaTiO₃, wobei TiO₂ enthaltende Materialien und insbesondere die Materialien, welche oben als für die Durchführung des erfindungsgemäßen Verfahrens bevorzugt angegeben wurden, mit CaO bei Temperaturen von über 1250°C und insbesondere bei 1450°C umgesetzt werden.

Um bei dem erhältlichen Klinker einerseits eine ausreichende photokatalytische Aktivität und andererseits die geforderten Festigkeiten zu gewährleisten, ist der erfindungsgemäße Klinker mit Vorteil dahingehend weitergebildet, dass CaTiO₃ in Mengen von 2 Gew.-% bis 10 Gew.-% und insbesondere in Mengen von 6 Gew.-% enthalten ist.

## Patentansprüche

1. verfahren zur Herstellung von photokatalytisch aktivem Klinker, wobei TiO₂ enthaltende Materialien mit Klinkerrohmehl bzw. -rohmix zu Kalziumtitanaten, insbesondere CaTiO₃, umgesetzt werden, **dadurch gekennzeichnet, dass** als TiO₂-enthaltende Materialien Farbschlamm, Altfarbe, Brennerasche, Kunststoffe und/oder verbrauchter TiO₂-Katalysator verwendet werden.

2. Verfahren nach Anspruch 1, **dadurch gekennzeichnet, dass** die TiO₂ enthaltenden Materialien gemeinsam mit Klinkerrohmix einem Drehrohrofen aufgegeben und gebrannt werden.

3. Verfahren nach Anspruch 1, **dadurch gekennzeichnet, dass** die TiO₂ enthaltenden Materialien und der Klinkerrohmix getrennt voneinander dem Drehrohrofen aufgegeben und im Drehrohrofen miteinander umgesetzt und gebrannt werden.

4. verfahren nach Anspruch 2 oder 3, **dadurch gekennzeichnet, dass** das Brennen bei Temperaturen von über 1250°C, bevorzugt bei 1350°C und besonders bevorzugt bei 1450°C erfolgt.

5. Verfahren nach einem der Ansprüche 1 bis 4, **dadurch gekennzeichnet, dass** die TiO₂ enthaltenden Materialien dem Klinkerrohmix in Mengen zugegeben werden, um einen TiO₂-Gehalt von 2 Gew.-% bis 5 Gew.-% und insbesondere von 3 Gew-% zu ergeben.

6. Verfahren nach einem der Ansprüche 1 bis 5, **dadurch gekennzeichnet, dass** als Klinkerrohmix ein Rohmix für CalciumSulfoaluminat-Klinker eingesetzt wird.

7. Verfahren nach einem der Ansprüche 1 bis 5, **dadurch gekennzeichnet, dass** als Klinkerrohmix ein Rohmix für Portlandzement-Klinker eingesetzt wird.

## Claims

1. A method for producing photocatalytically active clinker, wherein TiO₂-containing materials are reacted to calcium titanates, particularly CaTiO₃, with clinker raw meal or clinker raw mix, **characterized in that** waste substances such as dye sludge, waste dye, kiln ashes, synthetic materials and/or consumed TiO₂ catalyst are used as TiO₂-containing materials.

2. A method according to claim 1, **characterized in that** the TiO₂-containing materials are charged into, and burned in, a rotary kiln together with the clinker raw mix.

3. A method according to claim 1, **characterized in that** the TiO₂-containing materials and the clinker raw mix are separately charged into the rotary kiln, and reacted and burned together in the rotary kiln.

4. A method according to claim 2 or 3, **characterized in that** the combustion occurs at temperatures above 1250°C, / preferably at 1350°C, and in a particularly preferred manner at 1450°C.

5. A method according to any one of claims 1 to 4, **characterized in that** the TiO₂-containing materials are added to the clinker raw mix in amounts producing a TiO₂ content of 2% by weight to 5% by weight and, in particular, 3% by weight.

6. A method according to any one of claims 1 to 5, **characterized in that** a raw mix for calcium sulfoaluminate clinker is used as clinker raw mix.

7. A method according to any one of claims 1 to 5, **characterized in that** a raw mix for Portland cement clinker is used as clinker raw mix.

## Revendications

1. Procédé de production de klinker actif effet photocatalytique, dans lequel des matériaux contenant du TiO₂ réagissent avec une poudre brute ou un mélange brut de klinker pour donner des titanates de calcium, en particulier du CaTiO₃, **caractérisé en ce que** de la boue de peinture, des peintures usagées, de la cendre de calcination, des plastiques et/ou un catalyseur de TiO₂ usagé sont utilisés comme matériaux contenant du TiO₂.

2. Procédé selon la revendication 1, **caractérisé en ce que** les matériaux contenant du TiO₂ sont alimentés dans le four tubulaire rotatif conjointement avec le mélange brut de klinker et calcinés.

3. Procédé selon la revendication 1, **caractérisé en ce que** les matériaux contenant du TiO₂ et le mélange brut de klinker sont alimentés séparément dans le four tubulaire rotatif et régissent ensemble dans le four tubulaire rotatif et sont calcinés.

4. Procédé selon la revendication 2 ou 3, **caractérisé en ce que** la calcination s'effectue à des températures de plus de 1250 °C, de préférence à 1350 °C et particulièrement préférentiellement à 1450 °C.

5. Procédé selon l'une des revendications 1 à 4, **caractérisé en ce que** les matériaux contenant du TiO₂ sont ajoutés au mélange brut de klinker en des quantités permettant de donner une teneur en TiO₂ de 2 % en poids à 5 % en poids et en particulier de 3 % en poids.

6. Procédé selon l'une des revendications 1 à 5, **caractérisé en ce qu'**un mélange brut pour klinker de sulfoaluminate de calcium est utilisé comme mélange brut de klinker.

7. Procédé selon l'une des revendications 1 à 5, **caractérisé en ce qu'**un mélange brut pour klinker de ciment de Portland est utilisé comme mélange brut de klinker.
